# EUROPEAN PATENT SPECIFICATION

(11) **EP 1 471 219 B1**
(45) Date of publication and mention of the grant of the patent: **21.06.2006**
(21) Application number: 04009705.7
(22) Date of filing: 23.04.2004
(51) Int. Cl.: F01N 3/08, F01N 3/20, F01N 11/00, F02D 41/14, B01D 53/94

(54) **Exhaust gas cleaning system and SOx poisoning recovery method for internal combustion engine**
Abgasreinigungssystem und Verfahren zur Entfernung von Stickoxiden eines Verbrennungsmotors
Système d'épuration de gaz d'échappement et procédé de décontamination d'un moteur contaminé au soufre

(30) Priority: 25.04.2003 JP 2003121660
(43) Date of publication of application: 27.10.2004
(73) Proprietor: Toyota Jidosha Kabushiki Kaisha, Toyota-shi, Aichi-ken, 471-8571 (JP)
(72) Inventor: Kobayashi, Nobuki, Toyota-shi Aichi-ken, 471-8571 (JP); Tsuzuki, Masato, Toyota-shi Aichi-ken, 471-8571 (JP); Sugiyama, Tatsumasa, Toyota-shi Aichi-ken, 471-8571 (JP); Ishikawa, Masahiko, Toyota-shi Aichi-ken, 471-8571 (JP); Tahara, Jun, Toyota-shi Aichi-ken, 471-8571 (JP)
(74) Representative: Kuhnen & Wacker

(56) References cited:
- US-B1- 6 199 372
- PATENT ABSTRACTS OF JAPAN vol. 2000, no. 09, 13 October 2000 (2000-10-13) & JP 2000 161107 A (MITSUBISHI MOTORS CORP), 13 June 2000 (2000-06-13)
- PATENT ABSTRACTS OF JAPAN vol. 018, no. 310 (M-1620), 14 June 1994 (1994-06-14) & JP 06 066129 A (TOYOTA MOTOR CORP), 8 March 1994 (1994-03-08)
- PATENT ABSTRACTS OF JAPAN vol. 2002, no. 02, 2 April 2002 (2002-04-02) & JP 2001 304020 A (MITSUBISHI MOTORS CORP), 31 October 2001 (2001-10-31)

## Description

### BACKGROUND OF THE INVENTION

### 1. Field of the Invention

The present invention relates to an exhaust gas cleaning system and an SOx poisoning recovery method for an internal combustion engine.

### 2. Description of the Related Art

Occlusion and reduction type NOx catalysts (hereinafter simply referred to as "NOx catalysts") have been developed to clean or purify nitrogen oxides (NOx) in exhaust gases or emissions exhausted from internal combustion engines, in particular those which perform lean combustion. That is, In cases where the atmosphere around such an NOx catalyst contains a high concentration of oxygen, the NOx catalyst occludes the NOx in the exhaust gas or emission, whereas in cases where the atmosphere around the catalyst contains a low concentration of oxygen in the presence of reducing components in the form of unburnt components (hereinafter also referred to as "hydrocarbons (HC)") of fuel, the catalyst releases the NOx occluded therein so that the NOx can be reduced by the unburnt components, thus cleaning or purifying the exhaust gas. In the NOx catalyst of the occlusion and reduction type, sulfur oxides (SOx) in the exhaust gas are occluded similar to the NOx, so the exhaust gas purifying function of the NOx catalyst might be decreases as the amount of occlusion of the sulfur oxides in the NOx catalyst increases. As a result, there arise the following problems; that is, the NOx in the exhaust gas can not be purified or removed to a satisfactory extent, or the oxidation function of the NOx catalyst is decreased.

In view of the above problems, particular control (hereinafter referred to as "SOx poisoning recovery control") has been proposed in which the NOx catalyst with an increased amount of sulfur oxides (SOx) occluded therein is raised in its temperature and at the same time is exposed to an atmosphere including an air fuel mixture of a prescribed air-fuel ratio in the presence of HC, so that the SOx occluded in the NOx catalyst are caused to be released or desorbed therefrom, thereby recovering the NOx exhaust gas cleaning or purifying function of the NOx catalyst (for example, see a first patent document: Japanese patent application laid-open No. 07-217474).

However, hydrogen sulfide is generated in accordance with the release of the SOx occluded in the NOx catalyst, resulting in another problem that the exhaust gas emitted into the atmosphere gives out a foul stench or offensive odor. In order to cope with such a problem, there have been disclosed techniques in which for the purpose of preventing a large amount of SOx from being generated in a short period of time during the process of releasing the SOx from the NOx catalyst, the operation of an internal combustion engine is controlled so as to suppress the degree of release of the SOx based on the amount of SOx occlusion in the NOx catalyst (for example, see a second and a third patent document: Japanese patent application laid-open Nos. 2000-161107 and 2001-304020).

The exhaust gas purifying function and the oxidation function of the NOx catalyst are lowered by the SOx being occluded into the NOx catalyst, and hence it is necessary to release the occluded SOx from the NOx catalyst under the action of the SOx poisoning recovery control. Here, note that the oxidation function of the NOx catalyst varies in accordance with the amount of SOx occluded in the NOx catalyst. Accordingly, assuming that the air-fuel ratio of the exhaust gas flowing into the NOx catalyst in the course of the SOx poisoning recovery control is constant or set to be a prescribed air-fuel ratio, the HC in the exhaust gas might be emitted or discharged into the atmosphere without being cleaned or purified through oxidation by the NOx catalyst, thus giving rise to white smoke.

US 6,199,372 B1 discloses an apparatus and a method for regenerating an NOx catalyst for a diesel engine which is capable of regenerating the NOx catalyst having lower performance due to accumulated SOx. For this purposes, the regeneration apparatus includes an NOx catalyst in an exhaust pipe, a reductant fuel adding nozzle, a flow rate control valve for controlling a feed rate of reductant fuel supplied to the reductant fuel adding nozzle, an inlet temperature sensor of the NOx catalyst, and a regeneration control unit for computing the quantity of SOx taken into the NOx catalyst during a period of time in which the inlet temperature is not higher than a predetermined value with a zero feed rate instruction given to the flow control valve, and for outputting an instruction for supplying a quantity of the reductant fuel which is larger than a predetermined quantity thereof which is suitable for the operational condition of the diesel engine when the inlet temperature exceeds a predetermined value and the reductant fuel is started to be added.

### SUMMARY OF THE INVENTION

The present invention has been made in view of the problems as referred to above, and has for its object to provide an exhaust gas cleaning system and an SOx poisoning recovery method for an internal combustion engine equipped with an NOx catalyst adapted to occlude and reduce the NOx in an exhaust gas, and capable of preventing a large amount of HC from being discharged into the atmosphere thereby to suppress the generation of white smoke when the SOx occluded in the NOx catalyst are released under SOx poisoning recovery control.

The present invention focuses attention on an amount of SOx occluded in an NOx catalyst in order to solve the above-mentioned problems. In particular, attention is placed on the fact that the oxidation function of the NOx catalyst decreases as the amount of SOx occluded in the NOx catalyst increases.

Thus, according to one aspect of the present invention, there is provided an exhaust gas cleaning system for an internal combustion engine with an NOx catalyst disposed on an exhaust passage for occluding and reducing NOx in an exhaust gas discharged from the engine, The exhaust gas cleaning system comprises: an SOx occlusion amount estimation section that estimates an amount of SOx occluded in the NOx catalyst; an exhaust air-fuel ratio control section that controls an air-fuel ratio of the exhaust gas flowing into the NOx catalyst; an SOx poisoning recovery section that causes the SOx occluded in the NOx catalyst to be released therefrom by controlling the air-fuel ratio of the exhaust gas flowing into the NOx catalyst to be a prescribed air-fuel ratio by means of the exhaust air-fuel ratio control section when the amount of SOx occlusion estimated by the SOx occlusion amount estimation section becomes greater than a prescribed amount of SOx occlusion; and an HC concentration detector that is disposed on the exhaust passage at a location downstream of the NOx catalyst for detecting a concentration of HC in the exhaust gas. When the SOx occluded in the NOx catalyst is released by the SOx poisoning recovery section, the exhaust air-fuel ratio control section controls the air-fuel ratio of the exhaust gas flowing into the NOx catalyst to be at a richer side in accordance with a decrease in the amount of SOx occlusion estimated by the SOx occlusion amount estimation section, whereby the HC concentration detected by the HC concentration detector is adjusted to be less than or equal to a prescribed HC concentration.

As stated above, the NOx catalyst cleans or purifies the exhaust gas by occluding therein the NOx in the exhaust gas when the atmosphere around the catalyst is in a state of a high oxygen concentration, and by reducing the NOx occluded in the catalyst when the atmosphere around the catalyst is in a state of a low oxygen concentration with the existence of unburnt components of fuel which are reducing components. On the other hand, the SOx in the exhaust gas is also occluded in the NOx catalyst, so the exhaust gas purifying function and the oxidation function of the NOx catalyst decrease as the amount of SOx occlusion increases.

Accordingly, in order to release the SOx occluded in the NOx catalyst therefrom, SOx poisoning recovery control is carried out by the SOx poisoning recovery section. Specifically, the SOx poisoning recovery control is performed when the amount of SOx occlusion in the NOx catalyst estimated by the SOx occlusion amount estimation section becomes greater than the prescribed amount of SOx occlusion. Thus, the prescribed amount of SOx occlusion is a threshold to determine that the NOx catalyst should be subjected to the SOx poisoning recovery control, and it is decided or obtained from the capacity of the NOx catalyst, or the like.

Here, the SOx occlusion amount estimation section estimates the amount of SOx occluded in the NOx catalyst based on the operation time of the internal combustion engine, the concentration of sulfur in the fuel, etc. The SOx occlusion amount estimation section estimates not only an increasing amount of the SOx which is being occluded into the NOx catalyst in accordance with the operation of the internal combustion engine, but also a decreasing amount of the SOx which is released from the NOx catalyst under the SOx poisoning recovery control. The decreasing amount of SOx occlusion is estimated from the air-fuel ratio of the exhaust gas flowing into the NOx catalyst in the course of the SOx poisoning recovery control, the period of time during which the SOx poisoning recovery control is carried out, etc.

When the SOx poisoning recovery control is performed, the exhaust air-fuel ratio control section controls the air-fuel ratio of the exhaust gas flowing into the NOx catalyst to be a prescribed air-fuel ratio, whereby hydrocarbons (HC) in the form of a reducing agent are supplied to the NOx catalyst. As a result, the SOx occluded in the NOx catalyst can be released or desorbed therefrom. Thus, the prescribed air-fuel ratio is an air-fuel ratio of the exhaust gas for supplying to the NOx catalyst an amount of HC necessary to release the SOx occluded in the NOx catalyst therefrom. Here, the control on the air-fuel ratio of the exhaust gas by means of the exhaust air-fuel ratio control section is performed by adding fuel to the exhaust gas, or by adjusting the amount and timing of fuel to be injected into combustion chambers of the internal combustion engine, or the like. In this case, however, the oxidation function of the NOx catalyst varies in accordance with the amount of SOx occluded in the NOx catalyst. Therefore, if the air-fuel ratio of the exhaust gas flowing into the NOx catalyst is constant, there arises a fear that the HC in the exhaust gas might be discharged into the atmosphere without being oxidized in the NOx catalyst, because the oxidation function of the NOx catalyst is lowered when there is a large amount of SOx occluded in the NOx catalyst.

Accordingly, when the air-fuel ratio of the exhaust gas flowing into the NOx catalyst is controlled in the course of the SOx poisoning recovery control, the exhaust air-fuel ratio control section controls the air-fuel ratio of the exhaust gas flowing into the NOx catalyst to be at a richer side in accordance with a decrease of the estimated amount of SOx occlusion so as to prevent a large amount of HC from being included in the exhaust gas flowing out of the NOx catalyst. This serves to make the HC concentration detected by the HC concentration detector less than or equal to the prescribed HC concentration. Here, the prescribed HC concentration is an HC concentration allowed in the exhaust gas flowing out of the NOx catalyst. The prescribed HC concentration is decided depending upon the condition that the white smoke is generated by the large amount of HC in the case of high HC concentration in the exhaust gas.

The amount of SOx occluded in the NOx catalyst decreases gradually by the execution of the SOx poisoning recovery control, so the oxidation function of the NOx catalyst is gradually recovered, too. Accordingly, in cases where the oxidation function of the NOx catalyst is still low, i.e., at the instant when the SOx poisoning recovery control is started, the air-fuel ratio of the exhaust gas flowing into the NOx catalyst is controlled to be at a lean side, and the air-fuel ratio of the exhaust gas flowing into the NOx catalyst is controlled to be richer as the oxidation function of the NOx catalyst is gradually recovered, i.e, the amount of SOx occlusion in the NOx catalyst decreases, whereby an amount of HC corresponding to the oxidation function of the NOx catalyst can be supplied to the NOx catalyst. As a result, the concentration of HC in the exhaust gas flowing out of the NOx catalyst can be suppressed to the prescribed HC concentration or below, thus making it possible to suppress a large amount of HC from being discharged or emitted into the atmosphere.

Preferably, during the time the SOx occluded in the NOx catalyst are released therefrom under the SOx poisoning recovery control, when the HC concentration detected by the HC concentration detector exceeds a prescribed white smoke prevention HC concentration, the exhaust air-fuel ratio control section may correct the air-fuel ratio of the exhaust gas flowing into the NOx catalyst to be at a leaner side.

That is, in the above-mentioned exhaust gas cleaning system for an internal combustion engine, the discharge of a large amount of HC into the atmosphere is suppressed by the HC concentration of the exhaust gas detected by the HC concentration detector being controlled to the prescribed HC concentration or below. In such a state, if the HC concentration detected by the HC concentration detector is lower than but close to the prescribed HC concentration, there will be a fear of generating white smoke when the amount of HC exhausted from the internal combustion engine is suddenly increased due to an abrupt change in the operating condition of the internal combustion engine or the like. Thus, when the HC concentration of the exhaust gas detected by the HC concentration detector, even if lower than the prescribed HC concentration, exceeds the white smoke prevention HC concentration that might cause the generation of white smoke, the exhaust air-fuel ratio control section corrects the air-fuel ratio of the exhaust gas to a leaner side so as to make it to be a more appropriate air-fuel ratio. This is because a determination can be made that the air-fuel ratio of the exhaust gas is controlled to an excessively rich side in the aforementioned control of making the air-fuel ratio of the exhaust gas to a richer side in accordance with a decrease in the amount of SOx occlusion.

Consequently, when there is a fear that white smoke might be generated depending upon the operating condition of the internal combustion engine or the like even if the HC concentration of the exhaust gas is less than or equal to the prescribed HC concentration, the air-fuel ratio of the exhaust gas is corrected to a leaner side in the control of the air-fuel ratio of the exhaust gas by the exhaust air-fuel ratio control section. As a result, it is possible to prevent the discharge of a large amount of HC into the atmosphere thereby to suppress the generation of white smoke in a more reliable manner.

In order to solve the above-mentioned problems, according to another aspect of the present invention, there is provided an exhaust gas cleaning system for an internal combustion engine with an NOx catalyst disposed on an exhaust passage for occluding and reducing NOx in an exhaust gas discharged from the engine. The system comprises: an SOx occlusion amount estimation section that estimates an amount of SOx occluded in the NOx catalyst; an exhaust air-fuel ratio control section that controls an air-fuel ratio of the exhaust gas flowing into the NOx catalyst; an SOx poisoning recovery section that causes the SOx occluded in the NOx catalyst to be released therefrom by controlling the air-fuel ratio of the exhaust gas flowing into the NOx catalyst to be a prescribed air-fuel ratio by means of the exhaust air-fuel ratio control section when the amount of SOx occlusion estimated by the SOx occlusion amount estimation section becomes greater than a prescribed amount of SOx occlusion; and an HC concentration detector that is disposed on the exhaust passage at a location downstream of the NOx catalyst for detecting a concentration of HC in the exhaust gas. When the SOx occluded in the NOx catalyst is released by the SOx poisoning recovery section, the exhaust air-fuel ratio control section controls the air-fuel ratio of the exhaust gas flowing into the NOx catalyst to be at a richer side in accordance with a decrease in the amount of SOx occlusion estimated by the SOx occlusion amount estimation section, and when the HC concentration detected by the HC concentration detector exceeds a prescribed white smoke limitation HC concentration during the control, the exhaust air-fuel ratio control section corrects the air-fuel ratio of the exhaust gas flowing into the NOx catalyst to be at a leaner side.

Here, there is a relation between the estimated amount of SOx occlusion and the air-fuel ratio of the exhaust gas flowing into the NOx catalyst when the SOx occluded in the NOx catalyst are released therefrom by the SOx poisoning recovery section, as stated above. That is, the release of the occluded SOx from the NOx catalyst is carried out by making the air-fuel ratio of the exhaust gas flowing into the NOx catalyst to a richer side in accordance with a decrease in the amount of the SOx occluded in the NOx catalyst. In this case, however, when the HC concentration detected by the HC concentration detector exceeds the white smoke limitation HC concentration, the exhaust air-fuel ratio control section performs the correction of returning the air-fuel ratio of the exhaust gas to a leaner side in the control of making the air-fuel ratio of the exhaust gas to a richer side. With this correction, the air-fuel ratio of the exhaust gas, being once controlled to be an excessively rich side air-fuel ratio, is made to be an appropriate air-fuel ratio with less fear that a large amount of HC might be discharged into the atmosphere to generate white smoke. Thus, the white smoke limitation HC concentration is a threshold for the HC concentration which is decided by the condition of the generation of white smoke due to the HC concentration of the exhaust gas becoming high.

With this, an amount of HC corresponding to the oxidation function of the NOx catalyst is supplied to the NOx catalyst, and when the HC concentration of the exhaust gas exceeds the white smoke limitation HC concentration, the correction of returning the air-fuel ratio of the exhaust gas flowing into the NOx catalyst to a leaner side is carried out. As a consequence, the concentration of HC in the exhaust gas flowing out of the NOx catalyst can be suppressed to less than or equal to the white smoke limitation HC concentration above which white smoke might be generated, whereby it is possible to suppress a large amount of HC from being discharged into the atmosphere, thus preventing the generation of white smoke.

Here, when the frequency of corrections performed by the exhaust air-fuel ratio control section to control the air-fuel ratio of the exhaust gas to be at a leaner side is more than or equal to a prescribed frequency (i.e., a prescribed number of corrections), or when an amount of correction of the air-fuel ratio of the exhaust gas in the above-mentioned correction becomes greater than a prescribed amount of correction, the amount of SOx occlusion estimated by the SOx occlusion amount estimation section is corrected in an increasing sense.

The above-mentioned correction of making the air-fuel ratio of the exhaust gas to a leaner side is performed in the course of the control of making the air-fuel ratio of the exhaust gas flowing into the NOx catalyst to a richer side in accordance with a decrease in the amount of SOx occlusion in the NOx catalyst to release the SOx occluded in the NOx catalyst therefrom. Here, it is to be understood that this correction is carried out when it is determined that the air-fuel ratio of the exhaust gas controlled by the exhaust air-fuel ratio control section has been made to an excessively rich side. Therefore, such a correction being performed means that the air-fuel ratio of the exhaust gas flowing into the NOx catalyst might fall out of, or is in fact off, the range of an appropriate air-fuel ratio.

The reason for causing such a situation is considered as follows: in the control of the air-fuel ratio of the exhaust gas carried out by the exhaust air-fuel ratio control section, the amount of SOx occlusion estimated by the SOx occlusion amount estimation section is less than the amount of SOx actually occluded in the NOx catalyst. That is, it is considered that the amount of SOx occlusion estimated by the SOx occlusion amount estimation section is less than the actual amount of SOx occlusion, and hence the oxidation function of the NOx catalyst is determined as remaining excessively, as a result of which the exhaust air-fuel ratio control section controls the air-fuel ratio of the exhaust gas flowing into the NOx catalyst to be at an excessively rich side, so the above-mentioned correction is carried out.

It is considered that when the above-mentioned correction is carried out at the prescribed frequency or more, in other word when the correction of controlling the air-fuel ratio of the exhaust gas to a leaner side is carried out at the prescribed frequency or more, there is a high probability that the amount of SOx occlusion estimated by the SOx occlusion amount estimation section is less than the actual amount of SOx occlusion. Accordingly, a difference between the amount of SOx occlusion estimated by the SOx occlusion amount estimation section and the actual amount of SOx occlusion is removed by performing the correction of increasing the amount of SOx occlusion estimated by the SOx occlusion amount estimation section, whereby the air-fuel ratio of the exhaust gas flowing into the NOx catalyst can be estimated more accurately. Therefore, the above-mentioned prescribed frequency is a threshold to determine that there is a high probability that the above-mentioned correction is carried out resulting from that the amount of SOx occlusion estimated by the SOx occlusion amount estimation section is less than the actual amount of SOx occlusion.

Here, a parameter to determine that there is a high probability that the above-mentioned correction is carried out resulting from that the amount of SOx occlusion estimated by the SOx occlusion amount estimation section is less than the actual amount of SOx occlusion can be an amount of correction in the above-mentioned correction, i.e., an amount of variation of the air-fuel ratio required when the air-fuel ratio of the exhaust gas is returned to the leaner side air-fuel ratio. When the amount of SOx occlusion estimated by the SOx occlusion amount estimation section is excessively small, the air-fuel ratio of the exhaust gas flowing into the NOx catalyst results in an excessively rich side air-fuel ratio, so the HC concentration of the exhaust gas becomes high.

Accordingly, it is considered that when the amount of correction in the above-mentioned correction is more than a prescribed amount of correction, there is a high probability that the amount of SOx occlusion estimated by the SOx occlusion amount estimation section is less than the actual amount of SOx occlusion, and hence the amount of SOx occlusion estimated by the SOx occlusion amount estimation section is corrected in an increasing sense. With this, it is possible to remove the difference between the amount of SOx occlusion estimated by the SOx occlusion amount estimation section and the actual amount of SOx occlusion, whereby the air-fuel ratio of the exhaust gas flowing into the NOx catalyst can be estimated with a higher degree of accurate. Here, the above-mentioned prescribed amount of correction is a threshold to determine that there is a high probability that the above-mentioned correction is carried out resulting from that the amount of SOx occlusion estimated by the SOx occlusion amount estimation section is less than the actual amount of SOx occlusion.

In a further aspect of the present invention, the above-mentioned problems can be solved by an SOx poisoning recovery method for an internal combustion engine for recovering SOx poisoning of an NOx catalyst by controlling an air-fuel ratio of an exhaust gas flowing into the NOx catalyst disposed on an exhaust passage of the internal combustion engine to be a prescribed air-fuel ratio thereby to release SOx occluded in the NOx catalyst therefrom. The method comprises: an SOx occlusion amount estimation step for estimating an amount of SOx occluded in the NOx catalyst; an SOx poisoning recovery step for releasing the SOx occluded in the NOx catalyst therefrom by making an exhaust gas of a prescribed air-fuel ratio flow into the NOx catalyst; an HC concentration detection step for detecting a concentration of HC in the exhaust gas at a location downstream of the NOx catalyst; and an HC concentration control step for controlling the HC concentration detected in the HC concentration detection step to be less than or equal to a prescribed concentration of HC by adjusting the air-fuel ratio of the exhaust gas flowing into the NOx catalyst in the SOx poisoning recovery step to be at a richer side in accordance with the decreasing amount of SOx occlusion estimated in the SOx occlusion amount estimation step.

In the SOx poisoning recovery control step of the present invention, by controlling the air-fuel ratio of the exhaust gas flowing into the NOx catalyst to be the prescribed air-fuel ratio, hydrocarbons (HC) in the form of a reducing agent are supplied to the NOx catalyst, whereby the SOx occluded in the NOx catalyst is released or desorbed therefrom. Here, note that the prescribed air-fuel ratio is an air-fuel ratio of the exhaust gas for supplying to the NOx catalyst an amount of HC necessary to release the SOx occluded in the NOx catalyst therefrom.

Preferably, in the SOx occlusion amount estimation step of the present invention, the amount of the SOx being occluded into the NOx catalyst is estimated based on the operation time of the internal combustion engine and the concentration of sulfur in the fuel, and the amount of SOx occlusion decreased by the SOx released or desorbed from the NOx catalyst is also estimated based on the air-fuel ratio of the exhaust gas flowing into the NOx catalyst in the SOx poisoning recovery step, or the period of time for which the SOx poisoning recovery step is performed, or the like.

In the HC concentration control step of the present invention, the air-fuel ratio of the exhaust gas flowing into the NOx catalyst in the SOx poisoning recovery step is controlled to be at a richer side in accordance with the decreasing amount of SOx occlusion estimated in the SOx occlusion amount estimation step. This is equivalent in meaning to that the exhaust air-fuel ratio control section controls the air-fuel ratio of the exhaust gas flowing into the NOx catalyst to be at a richer side in accordance with a decrease in the estimated amount of SOx occlusion. This serves to make the HC concentration detected in the HC concentration detection step less than or equal to the prescribed HC concentration. Here, too, the prescribed HC concentration is an HC concentration allowed in the exhaust gas flowing out of the NOx catalyst.

With this, the concentration of HC in the exhaust gas flowing out of the NOx catalyst in the SOx poisoning recovery step can be suppressed to the prescribed HC concentration or below, thus making it possible to suppress a large amount of HC from being discharged or emitted into the atmosphere.

Preferably, in the present invention, an air-fuel ratio correction step may be provided for correcting the air-fuel ratio of the exhaust gas flowing into the NOx catalyst in the SOx poisoning recovery step to be at a leaner side when the HC concentration detected in the HC concentration detection step exceeds a prescribed white smoke prevention HC concentration.

Here, note that the white smoke prevention HC concentration, though lower than the prescribed HC concentration, is an HC concentration that might lead to the generation of white smoke if the amount of HC exhausted from the internal combustion engine is suddenly increased due to an abrupt change in the operating condition of the internal combustion engine or the like.

Thus, when the HC concentration of the exhaust gas, even if less than or equal to the prescribed above-mentioned HC concentration, exceeds the white smoke prevention HC concentration, the air-fuel ratio of the exhaust gas in the SOx poisoning recovery step is corrected to a leaner side. As a result, it is possible to prevent the discharge of a large amount of HC into the atmosphere thereby to suppress the generation of white smoke in a more reliable manner.

In a still further aspect of the present invention, there is provided an SOx poisoning recovery method for an internal combustion engine for recovering SOx poisoning of an NOx catalyst by controlling an air-fuel ratio of an exhaust gas flowing into the NOx catalyst disposed on an exhaust passage of the internal combustion engine to be a prescribed air-fuel ratio thereby to release SOx occluded in the NOx catalyst therefrom. The method comprises: an SOx occlusion amount estimation step for estimating an amount of SOx occluded in the NOx catalyst; an SOx poisoning recovery step for releasing the SOx occluded in the NOx catalyst therefrom by making an exhaust gas of a prescribed air-fuel ratio flow into the NOx catalyst; an HC concentration detection step for detecting a concentration of HC in the exhaust gas at a location downstream of the NOx catalyst; an exhaust air-fuel ratio control step for controlling the air-fuel ratio of the exhaust gas flowing into the NOx catalyst in the SOx poisoning recovery step to be at a richer side in accordance with the decreasing amount of SOx occlusion estimated in the SOx occlusion amount estimation step; and an air-fuel ratio correction step for correcting the air-fuel ratio of the exhaust gas flowing into the NOx catalyst to be at a leaner side when the HC concentration detected in the HC concentration detection step exceeds a prescribed white smoke limitation HC concentration.

With this, an amount of HC corresponding to the oxidation function of the NOx catalyst is supplied to the NOx catalyst, and when the HC concentration of the exhaust gas exceeds the white smoke limitation HC concentration, the correction of returning the air-fuel ratio of the exhaust gas flowing into the NOx catalyst to a leaner side is carried out. Consequently, the concentration of HC in the exhaust gas flowing out of the NOx catalyst can be suppressed to less than or equal to the white smoke limitation HC concentration above which white smoke might be generated, whereby it is possible to suppress a large amount of HC from being discharged into the atmosphere, thus preventing the generation of white smoke.

Here, note that the white smoke limitation HC concentration is a threshold for the HC concentration which is decided by the condition of the generation of white smoke due to the HC concentration of the exhaust gas becoming high.

Preferably, in the present invention, an estimated SOx occlusion amount correction step may be provided for performing the correction of increasing the amount of SOx occlusion estimated in the SOx occlusion amount estimation step when the correction of the air-fuel ratio of the exhaust gas to a leaner side in the air-fuel ratio correction step is performed at a prescribed frequency or more, or when the amount of correction of the air-fuel ratio of the exhaust gas in the air-fuel ratio correction step becomes greater than a prescribed amount of correction.

It is considered that when the above-mentioned correction is carried out at the prescribed frequency or more, or when the amount of correction in the above-mentioned correction is greater than the prescribed amount of correction, there is a high probability that the amount of SOx occlusion estimated by the SOx occlusion amount estimation step is less than the actual amount of SOx occlusion. Accordingly, a difference between the amount of SOx occlusion estimated in the SOx occlusion amount estimation step and the actual amount of SOx occlusion is removed by performing the correction of increasing the amount of SOx occlusion estimated in the SOx occlusion amount estimation step, whereby the air-fuel ratio of the exhaust gas flowing into the NOx catalyst can be estimated with a higher degree of accuracy. Here, note that each of the above-mentioned prescribed frequency and the above-mentioned prescribed amount of correction is a threshold to determine that there is a high probability that the above-mentioned correction is carried out resulting from that the amount of SOx occlusion estimated in the SOx occlusion amount estimation step is less than the actual amount of SOx occlusion.

The above and other objects, features and advantages of the present invention will become more readily apparent to those skilled in the art from the following detailed description of preferred embodiments of the present invention taken in conjunction with the accompanying drawings.

### BRIEF DESCRIPTION OF THE DRAWINGS

Fig. 1 is a block diagram showing the schematic construction of an exhaust gas cleaning system according to the present invention and an internal combustion engine and its control system including the exhaust gas cleaning system.
Fig. 2 is a flow chart showing the control of the air-fuel ratio of an exhaust gas flowing into an NOx catalyst at the time of SOx poisoning recovery control for the NOx catalyst in the exhaust gas cleaning system according to one embodiment of the present invention.
Fig. 3 is a second flow chart showing the control of the air-fuel ratio of an exhaust gas flowing into an NOx catalyst at the time of SOx poisoning recovery control for the NOx catalyst in the exhaust gas cleaning system according to another embodiment of the present invention.

### DESCRIPTION OF THE PREFERRED EMBODIMENTS

Hereinafter, preferred embodiments of an exhaust gas cleaning system for an internal combustion engine according to the present invention will be described in detail while referring to the accompanying drawings.

### <FIRST EMBODIMENT>

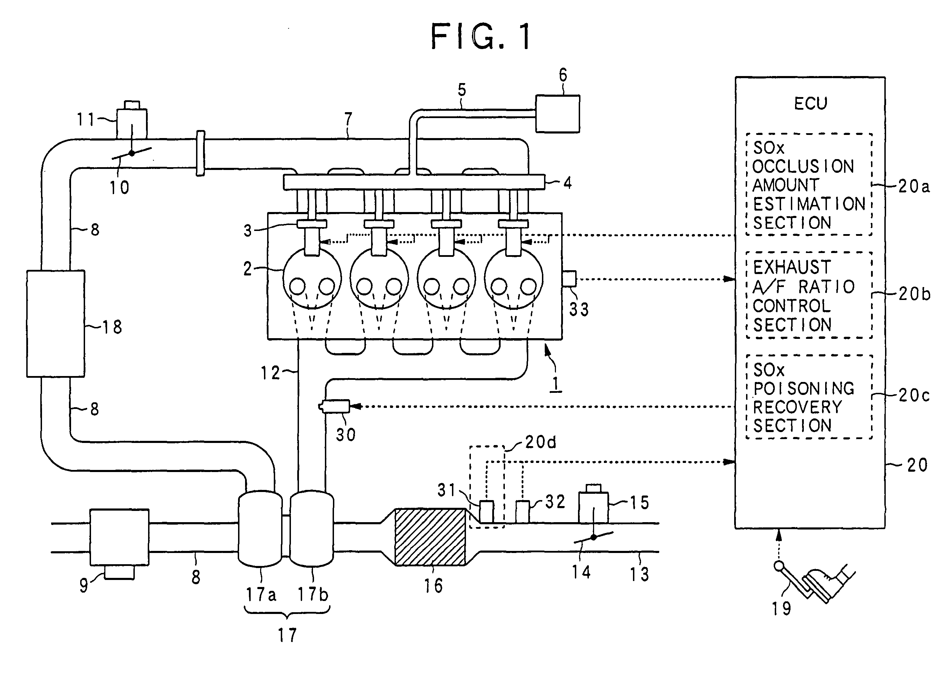

Fig. 1 is a block diagram that illustrates the schematic construction of an exhaust gas cleaning system to which the present invention is applied, along with an internal combustion engine and its control system including the exhaust gas cleaning system.

The internal combustion engine (hereinafter also referred to simply as an engine), generally designated at reference numeral 1, is a four-cycle engine having four cylinders 2. The engine 1 is provided with fuel injection valves 3, one for each cylinder 2, for directly injecting fuel into a combustion chamber of each cylinder 2. The respective fuel injection valves 3 are connected with an accumulator 4 that serves to accumulate or pressurize the fuel to a prescribed pressure. The accumulator 4 is in communication with a fuel pump 6 through a fuel supply pipe 5.

An intake manifold 7 is connected with the engine or engine 1 in such a manner that it is in communication with the combustion chambers of the respective cylinders 2 through intake ports (not illustrated), respectively. Here, communication between the combustion chamber of each cylinder 2 and its associated intake port is controlled by opening and closing of an associated intake valve (not illustrated). The intake manifold 7 is connected with an intake pipe 8 to which is attached an air flow meter 9 for generating an electric signal corresponding to the mass of intake air flowing through the intake pipe 8. A throttle valve 10 is disposed in the intake pipe 8 at a location immediately upstream of the intake manifold 7 for adjusting the flow rate of intake air flowing through the intake pipe 8. Attached to the throttle valve 10 is a throttle actuator 11 in the form of a step motor or the like for driving the throttle valve 10 to open and close.

Here, provision is made for a centrifugal supercharger (turbocharger) 17 which is adapted to be driven by a drive source in the form of the energy of the exhaust gas from the respective cylinders 2 to compress intake air supplied from the intake pipe 8 to the respective cylinders 2. The centrifugal supercharger 17 has a compressor housing 17a arranged on the intake pipe 8 at a location between the air flow meter 9 and the throttle valve 10, and an intercooler 18 for cooling the intake air which has been raised to a high temperature by compression thereof in the compressor housing 17a is installed on the intake pipe 8 at a location downstream of the compressor housing 17a.

On the other hand, an exhaust manifold 12 is connected with the engine 1 with its branch conduits being in communication with the combustion chambers of the respective cylinders 2 through exhaust ports, respectively. Here, communication between the combustion chamber of each cylinder 2 and its associated exhaust port is controlled by opening and closing of an exhaust valve (not illustrated). In addition, a fuel addition valve 30 for adding fuel to the exhaust gas flowing in the exhaust manifold 12 is installed on the exhaust manifold 12.

The exhaust manifold 12 is connected with a turbine housing 17b of the centrifugal supercharger 17, which is in turn connected with one end of an exhaust pipe 13 which is at the other end thereof connected with a muffler (not shown). In addition, an NOx catalyst 16 is installed on the exhaust pipe 13 at a location downstream of the turbine housing 17b for cleaning or purifying the exhaust gas discharged from the internal combustion engine by occluding and reducing the NOx in the exhaust gas. Here, note that a filter with an NOx catalyst carried thereon for capturing particulate materials in the exhaust gas may be used in place of the NOx catalyst 16.

Moreover, an exhaust throttle valve 14 is disposed in the exhaust pipe 13 at a location downstream of the NOx catalyst 16 for adjusting the flow rate of the exhaust gas passing through the exhaust pipe 13. Attached to the exhaust throttle valve 14 is a throttle actuator 15 in the form of a step motor or the like for driving the exhaust throttle valve 14 to open and close.

Here, the fuel injection valves 3 and the fuel addition valve 30 are operated to open and close by control signals from an electronic control unit (hereinafter referred to as ECU) 20. That is, the injection time and the injection quantity of fuel in each of the fuel injection valves 3 and the fuel addition valve 30 are controlled for each valve by means of commands from the ECU 20.

Further, an accelerator opening sensor 19 is electrically connected to the ECU 20, so that the ECU 20 receives a signal from the sensor 19 representative of the degree of opening or depression of an accelerator pedal, and calculates, based thereupon, engine output power and the like as required of the internal combustion engine 1. Moreover, a crank position sensor 33 is electrically connected to the ECU 20, so that the ECU 20 receives a signal from the sensor 33 representative of the angle of rotation of an output shaft or crankshaft of the internal combustion engine 1, and calculates, based thereupon, the rotational speed of the internal combustion engine 1, the states of operating cycles of the respective cylinders 2, and the like.

An exhaust HC concentration sensor 31 for detecting the concentration of HC in the exhaust gas flowing out of the NOx catalyst 16 into the exhaust pipe 13 is installed on the exhaust pipe 13 at a location downstream of the NOx catalyst 16. Also, an exhaust air-fuel ratio sensor 32 for detecting the air-fuel ratio of the exhaust gas flowing out of the NOx catalyst 16 into the exhaust pipe 13 is installed on the exhaust pipe 13 at a location downstream of the NOx catalyst 16 and in the vicinity of the exhaust HC concentration sensor 31. Here, note that the exhaust HC concentration sensor 31 constitutes an HC concentration detecor 20d in this embodiment.

The exhaust HC concentration sensor 31 and the exhaust air-fuel ratio sensor 32 are electrically connected to the ECU 20, respectively. The exhaust HC concentration sensor 31 detects and transmits a voltage corresponding to the concentration of HC in the exhaust gas to the ECU 20, whereby the concentration of HC in the exhaust gas is detected by the ECU 20. Also, the exhaust air-fuel ratio sensor 32 detects and transmits a voltage corresponding to the concentration of oxygen in the exhaust gas to the ECU 20, whereby the air-fuel ratio of the exhaust gas is detected by the ECU 20. The cleaning or purification of the exhaust gas discharged from the internal combustion engine 1 is carried out by the exhaust gas cleaning system constructed of these sensors, the NOx catalyst 16 and the like.

The ECU 20 includes a CPU, a ROM, a RAM and the like, and the ROM stores programs for performing a variety of kinds of control on the internal combustion engine 1, maps storing relevant data ant the like. In the present invention, the exhaust gas cleaning system includes an SOx occlusion amount estimation section 20a for estimating the amount of occlusion of the SOx occluded in the NOx catalyst 16, an exhaust air fuel (A/F) ratio control section 20b for controlling the air-fuel ratio of the exhaust gas flowing into the NOx catalyst 16, and an SOx poisoning recovery section 20c for releasing the SOx occluded in the NOx catalyst 16. These components or sections are parts of a control program stored in the ROM of the ECU 20, and are achieved through execution of the control program by the ECU 20.

Here, since the cleaning or purifying ability of the NOx catalyst is decreased due to the occlusion of SOx into the NOx catalyst 16, the SOx poisoning recovery control for releasing the SOx occluded in the NOx catalyst is carried out by the ECU 20. In the SOx poisoning recovery control, by adjusting the air-fuel ratio of the exhaust gas flowing into the NOx catalyst 16 to a prescribed air-fuel ratio, the bed temperature of the NOx catalyst 16 is controlled to be an appropriate temperature, and hydrocarbons (HC) are supplied to the NOx catalyst 16 as a reducing agent.

At this time, an injection command is issued from the ECU 20 to the fuel addition valve 30 so that fuel is added to the exhaust gas by the fuel addition valve 30, thereby properly adjusting the air-fuel ratio of the exhaust gas flowing into the NOx catalyst 16. The bed temperature of the NOx catalyst 16 is raised by part of the fuel added from the fuel addition valve 30 to the exhaust gas being oxidized under the oxidation function of the NOx catalyst 16, and the remainder of the fuel is supplied to the NOx catalyst 16 so that an amount of reducing agent necessary for the SOx poisoning recovery control can be thereby supplied.

The control on the air-fuel ratio of the exhaust gas in the SOx poisoning recovery control is to estimate the air-fuel ratio of the exhaust gas flowing into the NOx catalyst 16 based on the air-fuel ratio detected by the exhaust air-fuel ratio sensor 32, and to control the amount of fuel added by the fuel addition valve 30 so as to make the estimated air-fuel ratio equal to a prescribed exhaust air-fuel ratio. It is preferred that the relation between the actual air-fuel ratio of the exhaust gas in the NOx catalyst 16 and the air-fuel ratio detected by the exhaust air-fuel ratio sensor 32 be obtained in advance by experiments or the like and stored in the ROM in the ECU 20 as a map.

Here, note that although the air-fuel ratio flowing into the NOx catalyst 16 is adjusted to be equal to the prescribed air-fuel ratio so as to release the SOx occluded in the NOx catalyst 16 in the course of the SOx poisoning recovery control, as mentioned above, the oxidation function of the NOx catalyst 16 decreases as the amount of SOx occluded in the NOx catalyst 16 increases. Therefore, when the amount of SOx occluded in the NOx catalyst 16 is large, for instance when the SOx poisoning recovery control has just been started, if the air-fuel ratio of the exhaust gas flowing into the NOx catalyst 16 is excessively rich, an amount of HC, which should be primarily oxidized in the NOx catalyst 16, would pass through the NOx catalyst 16 without being oxidized, thus giving rise to a fear that a large amount of HC is emitted or discharged into the atmosphere to generate white smoke.

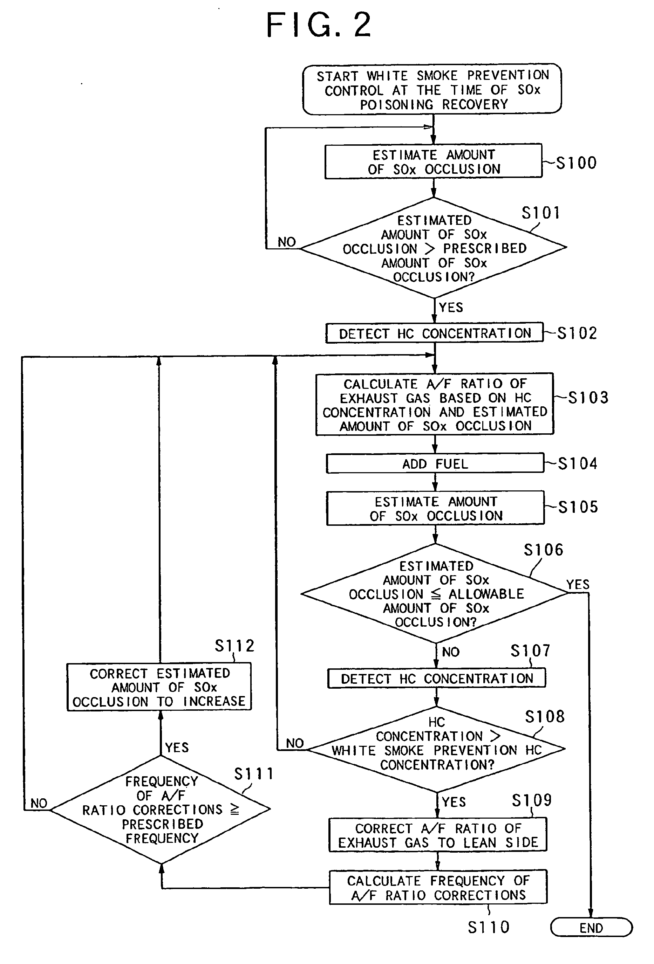

Accordingly, based on Fig. 2, reference will be made to the operation of this embodiment, i.e., the control of preventing a large amount of HC from being discharged into the atmosphere in the course of the SOx poisoning recovery control, thereby to suppress the generation of white smoke. Fig. 2 shows a flow chart for the control of preventing the generation of white smoke in the course of the SOx poisoning recovery control in the NOx catalyst 16. Here, note that such control together with the SOx poisoning recovery control is executed by the ECU 20.

First of all, the amount of SOx occluded in the NOx catalyst 16 is estimated in step S100. Specifically, after the last SOx poisoning recovery control has been completed, the amount of SOx occluded in the NOx catalyst 16 is estimated from the amount of fuel consumed in the internal combustion engine 1, or the distance of movement of a vehicle on which the internal combustion engine 1 is installed and which is related to the amount of fuel consumption, or the concentration of sulfur in the fuel of the internal combustion engine 1, or the like. When the process in step S100 has been completed, the control program executed by the ECU 20 proceeds to step S101.

In step S101, it is determined whether the amount of SOx occlusion in the NOx catalyst 16 estimated in step S100 is greater than a prescribed amount of occlusion or not. The prescribed amount of occlusion is a threshold for determining whether the amount of SOx occluded in the NOx catalyst 16 should be released, because of the fact that the exhaust gas cleaning or purifying function of the NOx catalyst 16 has been lowered due to a large amount of SOx occluded in the NOx catalyst 16. Accordingly, when it is determined in step S101 that the amount of SOx occluded in the NOx catalyst 16 is greater than the prescribed amount of occlusion, the processes in step S102 and thereafter are carried out to release the occluded SOx from the NOx catalyst 16, whereas when it is determined in step S101 that the amount of SOx occluded in the NOx catalyst 16 is less than or equal to the prescribed amount of occlusion, the process in step S100 is performed again.

In step S102, the concentration of HC in the exhaust gas flowing out of the NOx catalyst 16 is detected by the exhaust HC concentration sensor 31. When the process in S102 has been completed, the control program executed by the ECU 20 proceeds to step S103.

In step S103, an air fuel (A/F) ratio of the exhaust gas flowing into the NOx catalyst 16, suitable for releasing the SOx occluded in the NOx catalyst 16, is calculated based on the concentration of HC in the exhaust gas detected by the exhaust HC concentration sensor 31 and the amount of SOx occluded in the NOx catalyst 16. Specifically, by taking account of the fact that the oxidation function of the NOx catalyst 16 decreases as the amount of SOx occluded in the NOx catalyst 16 increases, the suitable air-fuel ratio of the exhaust gas is calculated in such a manner that it becomes at a lean side when the amount of SOx occluded in the NOx catalyst 16 is large, and it becomes richer in accordance with the increasing amount of SOx released from the NOx catalyst 16. The air-fuel ratio is adjusted so that the concentration of HC detected by the exhaust HC concentration sensor 31 at this time does not exceed a prescribed HC- concentration. The relation between the concentration of HC, the amount of SOx occlusion and the air-fuel ratio of the exhaust gas flowing into the NOx catalyst 16 is obtained in advance by experiments or the like, and stored in the ROM of the ECU 20. The prescribed HC concentration as referred to herein is a threshold for the HC concentration above which it is determined that white smoke might be generated in the exhaust gas discharged into the atmosphere. Thus, a large amount of HC is prevented from being discharged into the atmosphere at the release of the SOx occluded in the NOx catalyst 16, thereby making it possible to suppress the generation of white smoke. When the process in step S103 has been completed, the control program executed by the ECU 20 goes to step S104.

In step S104, the air-fuel ratio of the exhaust gas flowing into the NOx catalyst 16 is controlled by adding fuel to the exhaust gas discharged from the internal combustion engine 1 by means of the fuel addition valve 30. Specifically, the amount of addition of fuel by the fuel addition valve 30 is controlled based on the detection value of the exhaust air-fuel ratio sensor 32 or the like so as to make the air-fuel ratio of the exhaust gas flowing into the NOx catalyst 16 equal to the air-fuel ratio of the exhaust gas calculated in step S103. When the process in step S104 has been completed, the control program executed by the ECU 20 goes to step S105.

In step S105, an amount of SOx occluded in the NOx catalyst 16 is estimated. The amount of occluded SOx thus estimated is an amount of SOx occluded in the NOx catalyst 16 in consideration of the amount of SOx released from the NOx catalyst 16 by the addition of fuel in step S104. Therefore, the amount of occluded SOx in the NOx catalyst 16 estimated in this step S105 is used in the following control operations based on the amount of SOx occluded in the NOx catalyst 16, such as the control of the air-fuel ratio of the exhaust gas, etc. When the process in step S105 has been completed, the control program executed by the ECU 20 goes to step S106.

In step S106, it is determined whether the amount of SOx occluded in the NOx catalyst 16 is less than or equal to an allowable occlusion amount. Here, it is to be note that the allowable occlusion amount is a threshold to determine whether the exhaust gas cleaning or purifying function of the NOx catalyst 16 has been recovered due to the decreased amount of SOx occluded in the NOx catalyst 16. Accordingly, when it is determined in step S106 that the amount of SOx occluded in the NOx catalyst 16 is less than or equal to the allowable occlusion amount, a determination is made that the exhaust gas cleaning or purifying function of the NOx catalyst 16 has been recovered, and the ECU 20 then completes the control processing. On the other hand, when it is determined in step S106 that the amount of SOx occluded in the NOx catalyst 16 is greater than the allowable occlusion amount, a determination is made that the exhaust gas cleaning or purifying function of the NOx catalyst 16 has not yet been recovered, and the control program executed by the ECU 20 goes to step S107.

In step S107, the concentration of HC in the exhaust gas flowing out of the NOx catalyst 16 is detected by the exhaust HC concentration sensor 31. The concentration of HC thus detected is the concentration of HC in the exhaust gas after fuel has been added to the exhaust gas by the fuel addition valve 30 in step S104. When the process in step S107 has been completed, the control program executed by the ECU 20 goes to step S108.

In step S108, it is determined whether the concentration of HC of the exhaust gas detected in step S107 is higher than a prescribed white smoke prevention HC concentration. In this control operation, in steps S103 and S104, the air-fuel ratio of the exhaust gas flowing into the NOx catalyst 16 is controlled in such a manner that the concentration of HC of the exhaust gas does not exceed the prescribed HC concentration. Accordingly, the HC concentration of the exhaust gas does not exceed the prescribed HC concentration. In this connection, when the HC concentration of the exhaust gas is near the prescribed HC concentration, no white smoke will be generated in an anticipated or assumed operating condition of the internal combustion engine 1, but when the operating condition of the internal combustion engine 1 is varied rapidly, there might arise the case where the air-fuel ratio of the exhaust gas flowing into the NOx catalyst 16 cannot be quickly controlled, thus resulting in a fear of white smoke being generated.

Accordingly, when it is determined in step S108 that the HC concentration of the exhaust gas detected in step S107 is higher than the white smoke prevention HC concentration, the HC concentration of the exhaust gas detected in step S107, even if lower than the prescribed HC concentration, is considered to be an undesirable HC concentration. Thus, the control program executed by the ECU 20 proceeds to step S109, and the following processes are carried out. On the other hand, when it is determined in step S108 that the HC concentration of the exhaust gas detected in step S107 is lower than or equal to the white smoke prevention HC concentration, it is considered that the HC concentration of the exhaust gas is appropriate, so the processes from step S103 onward are again carried out in a repeated manner until the amount of SOx occluded in the NOx catalyst becomes equal to or less than the allowable occlusion amount.

In step S109, in view of the fact that it has been determined in step S108 that the HC concentration of the exhaust gas, even if lower than the prescribed HC concentration, is a rather undesirable HC concentration, the air-fuel ratio of the exhaust gas is corrected so as to provide a lower air-fuel ratio upon calculation of the air-fuel ratio of the exhaust gas flowing into the NOx catalyst 16. That is, it is considered that the HC concentration detected by the exhaust HC concentration sensor has exceeded the white smoke prevention HC concentration because when the air-fuel ratio of the exhaust gas flowing into the NOx catalyst 16 is calculated in step S103 as stated above, the air-fuel ratio of the exhaust gas thus calculated is an excessively rich side value. Accordingly, the air-fuel ratio of the exhaust gas calculated when the process of step S103 is performed at the next time onward in this control processing is corrected to be at a leaner side, so that the HC concentration of the exhaust gas can be prevented from exceeding the white smoke prevention HC concentration. When the process in step S109 has been completed, the control program executed by the ECU 20 goes to step S110.

In step S110, the frequency or number of corrections of the air-fuel ratio of the exhaust gas performed in step S109 is calculated. This frequency may be any of the frequency of corrections of the air-fuel ratio of the exhaust gas within a fixed period of time, the ratio in each determination in step S108 at which the HC concentration of the exhaust gas is determined to be greater than the white smoke prevention HC concentration, and other frequency. When the process in step S110 has been completed, the control program executed by the ECU 20 goes to step S111.

In step S111, it is determined whether the frequency of corrections of the air-fuel ratio of the exhaust gas calculated in step S110 is more than or equal to a prescribed frequency. In this control processing, the air-fuel ratio of the exhaust gas flowing into the NOx catalyst 16 is controlled based on an amount of the SOx estimated as being occluded into the NOx catalyst 16 in addition to the concentration of HC detected by the exhaust HC concentration sensor 31. Therefore, when the corrections of the air-fuel ratio of the exhaust gas are performed at a frequency (i.e., a number of corrections) more than or equal to the prescribed frequency, it is considered that there is a high probability that the amount of SOx occlusion estimated in step S100 or in step S105 is estimated to be less than an actual amount of SOx occlusion.

That is, when the amount of occlusion of SOx is estimated to be less than the actual amount of SOx occlusion, it is determined that the oxidation function of the NOx catalyst 16 is maintained high, so the air-fuel ratio of the exhaust gas is controlled to be a rich side air-fuel ratio. On the other hand, the actual oxidation function of the NOx catalyst 16 has been lowered since the amount of the SOx actually occluded in the NOx catalyst 16 is greater than the estimated amount of SOx occlusion. As a result, the NOx catalyst cannot oxidize the HC in the exhaust gas adjusted to the rich side air-fuel ratio to a satisfactory extent, and hence part of the HC is permitted to pass through the NOx catalyst 16 without being oxidized, so that it is discharged into the atmosphere, thus resulting in a cause of generating white smoke.

Accordingly, in step S111, it is determined, based on the frequency of corrections of the air-fuel ratio of the exhaust gas performed in step S109, whether the estimation of the amount of SOx occluded in the NOx catalyst 16 is carried out in an appropriate manner. When it is determined in step S111 that the frequency of corrections of the air-fuel ratio of the exhaust gas calculated in step S110 is more than or equal to the prescribed frequency, this means that the estimation of the amount of SOx occluded in the NOx catalyst 16 is not appropriate or correct, and hence, in this case, the control program executed by the ECU 20 proceeds to step S112. On the other hand, when it is determined that the frequency of corrections of the air-fuel ratio of the exhaust gas calculated in step S110 is less than the prescribed frequency, this means that the estimation of the amount of SOx occluded in the NOx catalyst 16 is appropriate or correct, and hence the processes from step S103 onward are performed again.

In step S112, the correction of increasing the estimated amount of occlusion in the process of step S105 performed at the next time onward is performed based on the determination in step S111 that the estimation of the amount of SOx occluded in the NOx catalyst 16 is not appropriate, whereby the difference between the amount of SOx occlusion estimated in step S105 and the amount of SOx actually occluded in the NOx catalyst 16 is removed. As a result, the air-fuel ratio of the exhaust gas flowing into the NOx catalyst 16 can be controlled more accurately. When the process in step S112 has been completed, the processes from step S103 are carried out again.

In this control, it is determined, based on the frequency of corrections of the air-fuel ratio of the exhaust gas performed in step S109, whether the estimation of the amount of the SOx to be occluded in the NOx catalyst 16 is carried out appropriately as stated above, in other words, whether there is no large difference between the estimated amount of SOx occlusion and the amount of the SOx actually occluded in the NOx catalyst 16. Here, note that it is also possible to make such a determination based on an amount of correction in the correction of the air-fuel ratio of the exhaust gas in place of the frequency of corrections of the air-fuel ratio of the exhaust gas.

When the correction amount of the air-fuel ratio of the exhaust gas is greater than a prescribed correction amount, the air-fuel ratio of the exhaust gas flowing into the NOx catalyst is excessively rich. Thus, it is considered that the correction amount required becomes large so as to correct the air-fuel ratio of the exhaust gas to be at a leaner side to provide an appropriate air-fuel ratio. Accordingly, in this case, there is a high probability that the estimation of the amount of SOx occluded in the NOx catalyst 16 is not appropriate. Here, note that the prescribed correction amount is a threshold to determine whether the estimation of the amount of SOx occluded in the NOx catalyst 16 is appropriate.

Accordingly, such a determination as to whether the estimation of the amount of SOx occluded in the NOx catalyst 16 is appropriate may be made based on the amount of correction in the correction of the air-fuel ratio of the exhaust gas. When it is determined that the estimation is not appropriate, the correction of increasing the estimated amount of SOx occlusion in the process of step S105 performed at the next time onward is carried out as in the process in step S112 as stated above.

According to this control, the air-fuel ratio of the exhaust gas flowing into the NOx catalyst is controlled to be an air-fuel ratio richer than a lean side one based on a decrease in the amount of SOx occluded in the NOx catalyst in the SOx poisoning recovery control of the NOx catalyst. This serves to suppress the HC concentration of the exhaust gas, which passes through the NOx catalyst to be discharged into the atmosphere, below or equal to a prescribed concentration. As a result, it is possible to prevent the discharge of a large amount of HC into the atmosphere thereby to suppress the generation of white smoke.

In addition, the air-fuel ratio of the exhaust gas flowing into the NOx catalyst is corrected based on the air-fuel ratio of the exhaust gas flowing out of the NOx catalyst, and the estimated amount of SOx occluded in the NOx catalyst is also corrected based on the frequency or amount of corrections. Consequently, it is possible to more reliably prevent a large amount of HC from being discharged into the atmosphere in the course of the SOx poisoning recovery control of the NOx catalyst, thereby suppressing the generation of white smoke in a more reliable manner.

Here, note that in this embodiment, the SOx occlusion amount estimation section 20a, the exhaust air-fuel ratio control section 20b, and the SOx poisoning recovery section 20c together constitute part of the control of preventing the generation of white smoke at the time of the SOx poisoning recovery control in the NOx catalyst 16. Specifically, each of the processes in steps S100 and S105 constitute the SOx occlusion amount estimation section 20a; the processes in steps S103 and S104 together constitute the exhaust air-fuel ratio control section 20b; and the processes in steps S101 through S104 together constitute the SOx poisoning recovery section 20c.

In addition, in this embodiment, each of the processes in steps S100 and S105 constitute an SOx occlusion amount estimation step; each of the processes in steps S102 and S107 constitute an HC concentration detection step; the processes in steps S101 through S104 together constitute an SOx poisoning recovery step; the processes in steps S103 and S104 together constitute an HC concentration management or control step; the processes in steps S108 and S109 together constitute an air-fuel ratio correction step; and the processes in steps S111 and S112 together constitute an estimated SOx occlusion amount correction step.

### <SECOND EMBODIMENT>

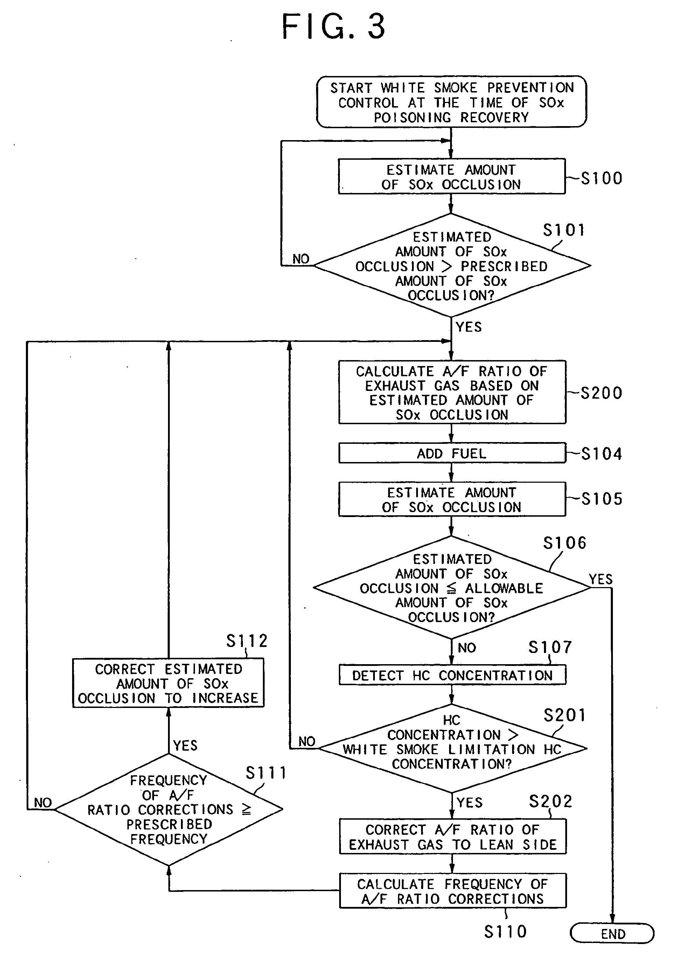

Now, based on Fig. 3, reference will be made to another embodiment of the present invention for the control of preventing a large amount of HC from being discharged into the atmosphere in the course of the SOx poisoning recovery control, thereby to suppress the generation of white smoke. Fig. 3 shows a flow chart for the control of preventing the generation of white smoke in the course of the SOx poisoning recovery control in the NOx catalyst 16. Here, note that such control together with the SOx poisoning recovery control is executed by the ECU 20. Here, note that in the while smoke prevention control during the SOx poisoning recovery as shown in Fig. 3, the same processes as those shown in Fig. 2 are identified by the same symbols as those employed in Fig. 2, while omitting an explanation thereof.

In the while smoke prevention control during the SOx poisoning recovery as shown in Fig. 3, when it is determined in step S101 that the amount of SOx occluded in the NOx catalyst 16 is more than the prescribed amount of occlusion, the control program executed by the ECU 20 proceeds to step S200.

In step S200, an air-fuel ratio of the exhaust gas flowing into the NOx catalyst 16, suitable for releasing the SOx occluded in the NOx catalyst 16, is calculated based on the amount of SOx occluded in the NOx catalyst 16. Specifically, by taking account of the fact that the oxidation function of the NOx catalyst 16 decreases as the amount of SOx occluded in the NOx catalyst 16 increases, the air-fuel ratio of the exhaust gas is calculated in such a manner that it becomes a lean side air-fuel ratio when the amount of SOx occluded in the NOx catalyst 16 is large, and it becomes richer in accordance with the increasing amount of the SOx released from the NOx catalyst 16. The relation between the amount of SOx occlusion and the air-fuel ratio of the exhaust gas flowing into the NOx catalyst 16 is obtained in advance by experiments or the like, and stored in the ROM of the ECU 20. When the process in step S200 has been completed, the control program executed by the ECU 20 proceeds to step S104. The contents of the processes in steps S104 through S107 are the same as those stated before in the above-mentioned first embodiment with reference to Fig. 2. When the process in step S107 has been completed, the control program executed by the ECU 20 proceeds to step S201.

In step S201, it is determined whether the concentration of HC in the exhaust gas detected in step S107 is higher than a prescribed white smoke limitation HC concentration. The white smoke limitation HC concentration is an HC concentration of the exhaust gas above which the concentration of HC in the exhaust gas is so high that a large amount of HC might be discharged into the atmosphere to generate white smoke. In the control of this second embodiment, in steps S200 and S104, the air-fuel ratio of the exhaust gas flowing into the NOx catalyst 16 is controlled based on the amount of SOx occluded in the NOx catalyst 16. Therefore, the oxidation function of the NOx catalyst 16 is estimated based on the amount of SOx occlusion, and the air-fuel ratio of the exhaust gas flowing into the NOx catalyst 16 is controlled in accordance with the oxidation function thus estimated. In such a case, however, when the HC concentration of the exhaust gas detected by the exhaust HC concentration sensor 31 exceeds the white smoke limitation HC concentration, the HC concentration of the exhaust gas discharged into the atmosphere becomes high, so white smoke might be generated.

Accordingly, since there is a fear that white smoke is generated when it is determined in step S201 that the HC concentration of the exhaust gas detected in step S107 is higher than the white smoke limitation HC concentration, the control program executed by the ECU 20 proceeds to step S202, and the processes in Step S202 and thereafter are performed. On the other hand, when it is determined in step S201 that the HC concentration of the exhaust gas detected in step S107 is lower than or equal to the white smoke limitation HC concentration, the HC concentration of the exhaust gas is appropriate. Thus, the processes from steps S200 through S201 are again carried out in a repeated manner until the amount of SOx occluded in the NOx catalyst becomes equal to or less than an allowable occlusion amount.

In step S202, in view of the fact that it has been determined in step S201 that the HC concentration of the exhaust gas is higher than the white smoke limitation HC concentration and there is a fear of white smoke being generated, the air-fuel ratio calculated as that of the exhaust gas flowing into the NOx catalyst is corrected to a leaner side. That is, it is considered that the HC concentration detected by the exhaust HC concentration sensor 31 has exceeded the white smoke limitation HC concentration because the air-fuel ratio of the exhaust gas, which has been calculated as that of the exhaust gas flowing into the NOx catalyst 16 in step S200 as stated above, is an excessively rich side value. Accordingly, the air-fuel ratio of the exhaust gas is corrected so as to be in a leaner side when the process of step S200 is performed at the next time onward in this control processing, so that the HC concentration of the exhaust gas does not exceed the white smoke limitation HC concentration. When the process in step S202 has been completed, the control program executed by the ECU 20 proceeds to step S110.

The processes from steps S110 through S112 are the same as those shown in Fig. 2 as stated above with reference to the above-mentioned first embodiment. When it is determined in step S111 that the frequency of corrections of the air-fuel ratio of the exhaust gas calculated in step S110 is lower than a prescribed frequency or when the process of S112 is completed, the processes of steps S200 and onward are carried out again.

According to the control of this second embodiment, the air-fuel ratio of the exhaust gas flowing into the NOx catalyst is controlled to be an air-fuel ratio richer than a lean side one based on a decrease in the amount of SOx occluded in the NOx catalyst in the course of the SOx poisoning recovery control of the NOx catalyst. This serves to suppress the HC concentration of the exhaust gas, which flows out of the NOx catalyst to be discharged into the atmosphere. As a result, it is possible to prevent the discharge of a large amount of HC into the atmosphere thereby to suppress the generation of white smoke.

In addition, the air-fuel ratio of the exhaust gas flowing into the NOx catalyst is corrected based on the concentration of HC in the exhaust gas flowing out of the NOx catalyst, and the estimated amount of SOx occluded in the NOx catalyst is also corrected based on the frequency or amount of corrections. Consequently, it is possible to more reliably prevent a large amount of HC from being discharged into the atmosphere in the course of the SOx poisoning recovery control of the NOx catalyst, thereby suppressing the generation of white smoke in a more reliable manner.

Here, note that the processes in steps S200 through S104 together constitute the exhaust air-fuel ratio control section 20b; and the processes in steps S101 through S104 including S200 together constitute the SOx poisoning recovery section 20c.

In addition, each of the processes in steps S100 and S105 constitute an SOx occlusion amount estimation step; the process in step S107 constitutes an HC concentration detection step; the processes in steps S200 through S104 together constitute an exhaust gas air-fuel ratio control step; the processes in steps S101 through S104 including S200 together constitute an SOx poisoning recovery step; the processes in steps S201 and S202 together constitute an air-fuel ratio correction step; and the processes in steps S111 and S112 together constitute an estimated SOx occlusion amount correction step.

In an exhaust gas cleaning system for an internal combustion engine according to the present invention, the air-fuel ratio of the exhaust gas flowing into the NOx catalyst is controlled to be an air-fuel ratio richer than a lean side one based on a decrease in the amount of SOx occluded in the NOx catalyst in the SOx poisoning recovery control of the NOx catalyst, whereby it is possible to suppress the HC concentration of the exhaust gas, which passes through the NOx catalyst to be discharged into the atmosphere, below or equal to a prescribed concentration. As a result, it is possible to prevent the discharge of a large amount of HC into the atmosphere thereby to suppress the generation of white smoke.

While the invention has been described in terms of preferred embodiments, those skilled in the art will recognize that the invention can be practiced with modifications within the scope of the appended claims.

## Claims

1. An exhaust gas cleaning system for an internal combustion engine with an NOx catalyst (16) disposed on an exhaust passage (13) for occluding and reducing NOx in an exhaust gas discharged from said engine, wherein:
an SOx occlusion amount estimation section (20a) that estimates an amount of SOx occluded in said NOx catalyst (16);
an exhaust air-fuel ratio control section (20b) that controls an air-fuel ratio of the exhaust gas flowing into said NOx catalyst (16);
an SOx poisoning recovery section (20c) that causes the SOx occluded in said NOx catalyst (16) to be released therefrom by controlling the air-fuel ratio of the exhaust gas flowing into said NOx catalyst (16) to be a prescribed air-fuel ratio by means of said exhaust air-fuel ratio control section (20b) when the amount of SOx occlusion estimated by said SOx occlusion amount estimation section (20a) exceeds a prescribed amount of SOx occlusion; and
an HC concentration detector (20d) that is disposed on said exhaust passage (13) at a location downstream of said NOx catalyst (16) for detecting a concentration of HC in the exhaust gas;
**characterized by** when the SOx occluded in said NOx catalyst (16) is released by said SOx poisoning recovery section (20c), said exhaust air-fuel ratio control section (20b) controls the air-fuel ratio of the exhaust gas flowing into said NOx catalyst (16) to be at a richer side in accordance with a decrease in said amount of SOx occlusion estimated by said SOx occlusion amount estimation section (20a), whereby said HC concentration detected by said HC concentration detector (20d) is adjusted to be less than or equal to a prescribed HC concentration.

2. The exhaust gas cleaning system for an internal combustion engine as set forth in claim 1, **characterized in that** during the time the SOx occluded in said NOx catalyst (16) is released by said SOx poisoning recovery section (20c), when said HC concentration detected by said HC concentration detector (20d) exceeds a prescribed white smoke prevention HC concentration, said exhaust air-fuel ratio control section (20b) corrects the air-fuel ratio of the exhaust gas flowing into said NOx catalyst (16) to be at a leaner side.

3. The exhaust gas cleaning system for an internal combustion engine as set forth in claim 2, **characterized in that** when the frequency of corrections performed by said exhaust air-fuel ratio control section (20b) to control the air-fuel ratio of the exhaust gas to be at a leaner side is more than or equal to a prescribed frequency, or when an amount of correction of the air-fuel ratio of the exhaust gas in said correction exceeds a prescribed amount of correction, the amount of SOx occlusion estimated by said SOx occlusion amount estimation section (20a) is corrected to increase.

4. An SOx poisoning recovery method for an internal combustion engine for recovering SOx poisoning of an NOx catalyst (16) by controlling an air-fuel ratio of an exhaust gas flowing into said NOx catalyst (16) disposed on an exhaust passage (13) of the internal combustion engine (1) to be a prescribed air-fuel ratio thereby to release SOx occluded in said NOx catalyst (16) therefrom, wherein :
an SOx occlusion amount estimation step (S100, S105) for estimating an amount of SOx occluded in said NOx catalyst (16);
an SOx poisoning recovery step (S101 through S104) for releasing the SOx occluded in said NOx catalyst (16) therefrom by making an exhaust gas of a prescribed air-fuel ratio flow into said NOx catalyst (16);
an HC concentration detection step (S 102, S107) for detecting a concentration of HC in the exhaust gas at a location downstream of said NOx catalyst (16); and
an HC concentration control step (S103 and S104) for controlling said HC concentration detected in said HC concentration detection step (S107) to be less than or equal to a prescribed concentration of HC by adjusting the air-fuel ratio of the exhaust gas flowing into said NOx catalyst (16) in said SOx poisoning recovery step (S101 through S 104) to be at a richer side in accordance with the decreasing amount of SOx occlusion estimated in said SOx occlusion amount estimation step (S100, S 105).

5. The SOx poisoning recovery method for an internal combustion engine as set forth in claim 4, further **characterized by**:
an air-fuel ratio correction step (S108 and S109) for correcting the air-fuel ratio of the exhaust gas flowing into said NOx catalyst (16) in said SOx poisoning recovery step (S101 through S104) to be at a leaner side when said HC concentration detected in said HC concentration detection step (S 107) exceeds a prescribed white smoke prevention HC concentration.

6. The SOx poisoning recovery method for an internal combustion engine as set forth in claim 5, further **characterized by**:
an estimated SOx occlusion amount correction step (S111 and S 112) for performing the correction of increasing the amount of SOx occlusion estimated in said SOx occlusion amount estimation step (S 105) when the correction of the air-fuel ratio of the exhaust gas to a leaner side in said air-fuel ratio correction step (S201 and S202) is performed at a prescribed frequency or more, or when the amount of correction of the air-fuel ratio of the exhaust gas in said air-fuel ratio correction step (S201 and S202) exceeds a prescribed amount of correction.

## Patentansprüche

1. Abgasreinigungssystem für einen Verbrennungsmotor mit einem NOx-Katalysator (16), der an einer Abgasleitung (13) angeordnet ist, um NOx im Abgas, das vom Motor abgegeben wird, zu speichern und zu reduzieren, wobei:
ein SOx-Speichermengen-Schätzabschnitt (20a) die SOx-Menge schätzt, die im NOx-Katalysator (16) gespeichert ist;
ein Steuerabschnitt (20b) für das Luft/Kraftstoff Verhältnis des Abgases das Luft/Kraftstoff-Verhältnis des Abgases, das in den NOx-Katalysator (16) strömt, steuert;
ein SOx-Vergiftungsregenerierungsabschnitt (20c) bewirkt, dass das SOx, das im NOx-Katalysator (16) gespeichert ist, durch Steuern des Luft/Kraftstoff-Verhältnisses des Abgases, das in den NOx-Katalysator (16) strömt, durch den Steuerabschnitt für das Luft/Kraftstoff Verhältnis des Abgases (20b) auf ein vorgegebenes Luft/Kraftstoff-Verhältnis gesteuert wird, wenn die gespeicherte SOx-Menge, die durch den SOx-Speichermengen-Schätzabschnitt (20a) geschätzt wird, eine vorgegebene SOx-Speichermenge übersteigt; und
ein HC-Konzentrationsdetektor (20d) an der Abgasleitung (13) dem NOx-Katalysator (16) nachgeschaltet angeordnet ist, um die HC-Konzentration im Abgas zu erfassen;
**dadurch gekennzeichnet, dass**, wenn das im NOx-Katalysator (16) gespeicherte SOx vom SOx-Vergiftungsregenerierungsabschnitt (20c) freigesetzt wird, der Steuerabschnitt (20b) für das Luft/Kraftstoff-Verhältnis des Abgases das Luft/Kraftstoff-Verhältnis des Abgases, das in den NOx-Katalysator (16) strömt, so steuert, dass es entsprechend der Abnahme der gespeicherten SOx-Menge, die vom SOx-Speichermengen-Schätzabschnitt (20a) geschätzt wird, zur fetten Seite hin gesteuert wird, wodurch die HC-Konzentration, die vom HC-Konzentrationsdetektor (20d) erfasst wird, so angepasst wird, dass sie höchstens so hoch ist wie eine vorgegebene HC-Konzentration.

2. Abgasreinigungssystem für einen Verbrennungsmotor nach Anspruch 1, **dadurch gekennzeichnet, dass** während der Zeit, in der das im NOx-Katalysator (16) gespeicherte SOx vom SOx-Vergiftungsregenerierungsabschnitt (20c) freigesetzt wird, wenn die vom HC-Konzentrationsdetektor (20d) erfasste HC-Konzentration eine vorgegebene Konzentration, bei der weißer Rauch vermieden wird, überschreitet, der Steuerabschnitt für das Luft/Kraftstoff-Verhältnis des Abgases (20b) das Luft/Kraftstoff-Verhältnis des Abgases, das in den NOx-Katalysator (16) strömt, auf einen Wert steuert, der weiter auf der mageren Seite liegt.

3. Abgasreinigungssystem für einen Verbrennungsmotor nach Anspruch 2, **dadurch gekennzeichnet, dass**, wenn die Häufigkeit der Korrekturen, die vom Steuerabschnitt zur Steuerung des Luft/Kraftstoff-Verhältnisses durchgeführt wird, um das Luft/Kraftstoff-Verhältnis des Abgases weiter auf die magere Seite zu steuern, mindestens so hoch ist wie eine vorgegebene Frequenz oder wenn der Korrekturbetrag des Luft/Kraftstoff-Verhältnisses des Abgases bei der Korrektur einen vorgegebenen Korrekturbetrag überschreitet, die SOx-Speichermenge, die vom SOx-Speichermengen-Schätzabschnitt (20a) geschätzt wird, nach oben korrigiert wird.

4. SOx-Vergiftungsregenerierungsverfahren für einen Verbrennungsmotor zum Regenerieren eines SOx-vergifteten NOx-Katalysators (16) durch Steuern des Luft/Kraftstoff-Verhältnisses des Abgases, das in den NOx-Katalysator (16) strömt, welcher an einer Abgasleitung (13) des Verbrennungsmotors (1) angeordnet ist, auf ein vorgegebenes Luft/Kraftstoff-Verhältnis, um SOx, das im NOx-Katalysator (16) gespeichert ist, freizusetzen, wobei:
in einem SOx-Speichermengen-Schätzungsschritt (S 100, S 105) die SOx-Menge, die im NOx-Katalysator (16) gespeichert ist, geschätzt wird;
in einem SOx-Vergiftungsregenerierungsschritt (S 101 bis S 104) SOx, das im NOx-Katalysator (16) gespeichert ist, aus diesem freigesetzt wird, indem man Abgas mit einem vorgegebenen Luft/Kraftstoff-Verhältnis in den NOx-Katalysator (16) strömen lässt;
in einem HC-Konzentrationserfassungsschritt (S 102, S 107) die HC-Konzentration im Abgas an einer Stelle, die dem NOx-Katalysator (16) nachgeschaltet ist, erfasst wird; und
in einem HC-Konzentrationssteuerschritt (S 103 und S 104) die HC-Konzentration, die im HC-Konzentrationserfassungsschritt (S 107) als höchstens einer vorgebenen HC-Konzentration gleich erfasst wird, durch Einstellen des Luft/Kraftstoff-Verhältnisses des Abgases, das im SOx-Vergiftungsregenerierungsschritt (S101 bis S104) in den NOx-Katalysator (16) strömt, gemäß der abnehmenden Menge an gespeichertem SOx, die im SOx-Speichermengen-Schätzungsschritt (S 100, S 105) geschätzt wird, auf einen Wert weiter auf der fetten Seite gesteuert wird.

5. SOx-Vergiftungsregenerierungsverfahren für einen Verbrennungsmotor nach Anspruch 4, ferner **gekennzeichnet durch**:
einen Korrekturschritt für das Luft/Kraftstoff-Verhältnis (S 108 und S 109) zum Korrigieren des Luft/Kraftstoff Verhältnisses des Abgases, das im SOx-Vergif tungsregenerierungsschritt (S 101 bis S104) in den NOx-Katalysator (16) strömt, auf einen Wert weiter auf der mageren Seite, wenn die HC-Konzentration, die im Erfassungsschritt für die HC-Konzentration (S 107) erfasst wird, eine vorgegebene HC-Konzentration, bei der weißer Rauch vermieden wird, überschreitet.

6. SOx-Vergiftungsregenerierungsverfahren für einen Verbrennungsmotor nach Anspruch 5, ferner **gekennzeichnet durch**:
einen Korrekturschritt für die geschätzte SOx-Speichermenge (S111 und S 112) zum Durchführen einer Korrektur, bei der die im SOx-Speichermengen-Schätzungsschritt (S 105) geschätzte SOx-Speichermenge nach oben korrigiert wird, wenn die Korrektur des Luft/Kraftstoff-Verhältnisses des Abgases auf einen Wert weiter auf der mageren Seite im Korrekturschritt für das Luft/Kraftstoff-Verhältnis (S201 und S202) mit mindestens einer vorgeschriebenen Frequenz ausgeführt wird oder wenn der Korrekturumfang des Luft/Kraftstoff-Verhältnisses des Abgases im Korrekturschritt für das Luft/Kraftstoff Verhältnis (S201 und S202) einen vorgegebenen Korrekturumfang übersteigt.

## Revendications

1. Système d'épuration de gaz d'échappement pour un moteur à combustion interne avec un catalyseur de NOₓ (16) disposé sur un passage d'échappement (13) pour occlure et réduire les NOₓ dans un gaz d'échappement déchargé dudit moteur, dans lequel :
une section d'estimation de la quantité d'occlusion de SOₓ (20a) qui estime une quantité de SOₓ occluse dans ledit catalyseur de NOₓ (16) ;
une section de commande de rapport air/carburant d'échappement (20b) qui commande un rapport air/carburant des gaz d'échappement affluant dans ledit catalyseur de NOₓ (16) ;
une section d'élimination de la contamination par les SOₓ (20c) qui fait que les SOₓ occlus dans ledit catalyseur de NOₓ (16) sont libérés de celui-ci en commandant le rapport air/carburant des gaz d'échappement affluant dans ledit catalyseur de NOₓ (16) pour que celui-ci soit un rapport air/carburant prescrit au moyen de ladite section de commande de rapport air/carburant d'échappement (20b) lorsque la quantité d'occlusion de SOₓ estimée par ladite section d'estimation de la quantité d'occlusion de SOₓ (20a) excède une quantité prescrite d'occlusion de SO_{X} ; et
un détecteur de concentration de HC (20d) qui est disposé sur ledit passage d'échappement (13) en un point en aval dudit catalyseur de NOₓ (16) pour détecter une concentration de HC dans les gaz d'échappement ;
**caractérisé en ce que** lorsque les SOₓ occlus dans ledit catalyseur de NOₓ (16) sont libérés par ladite section d'élimination de la contamination par les SOₓ (20c), ladite section de commande de rapport air/carburant d'échappement (20b) commande le rapport air/carburant des gaz d'échappement affluant dans ledit catalyseur de NOₓ (16) pour que celui-ci soit plus riche conformément à une diminution de ladite quantité d'occlusion de SOₓ estimée par ladite section d'estimation de la quantité d'occlusion de SOₓ (20a), d'où il résulte que ladite concentration de HC détectée par ledit détecteur de concentration de HC (20d) est ajustée de manière à être inférieure ou égale à une concentration de HC prescrite.

2. Système d'épuration de gaz d'échappement pour un moteur à combustion interne selon la revendication 1, **caractérisé en ce que** pendant le moment lors duquel les SOₓ occlus dans ledit catalyseur de NOₓ (16) sont libérés par ladite section d'élimination de la contamination par les SOₓ (20c), lorsque ladite concentration de HC détectée par ledit détecteur de concentration de HC (20d) excède une concentration de HC prescrite de prévention de fumées blanches, ladite section de commande de rapport air/carburant d'échappement (20b) corrige le rapport air/carburant des gaz d'échappement affluant dans ledit catalyseur de NOₓ (16) pour que celui-ci soit plus pauvre.

3. Système d'épuration de gaz d'échappement pour un moteur à combustion interne selon la revendication 2, **caractérisé en ce que** lorsque la fréquence des corrections effectuées par ladite section de commande de rapport air/carburant d'échappement (20b) pour commander le rapport air/carburant des gaz d'échappement pour que celui-ci soit plus pauvre est supérieure ou égale à une fréquence prescrite, ou lorsqu'une quantité de correction du rapport air/carburant des gaz d'échappement dans ladite correction excède une quantité de correction prescrite, la quantité d'occlusion de SOₓ estimée par ladite section d'estimation de la quantité d'occlusion de SOₓ (20a) est corrigée à l'augmentation.

4. Procédé d'élimination de la contamination par les SOₓ pour un moteur à combustion interne pour éliminer la contamination par les SOₓ d'un catalyseur de NOₓ (16) en commandant un rapport air/carburant d'un gaz d'échappement affluant dans ledit catalyseur de NOₓ (16) disposé sur un passage d'échappement (13) du moteur à combustion interne (1) pour que celui-ci soit un rapport air/carburant prescrit, pour ainsi libérer les SOₓ occlus dans ledit catalyseur de NOₓ (16) de celui-ci, dans lequel :
une étape d'estimation de la quantité d'occlusion de SOₓ (S100, S105) pour estimer une quantité de SOₓ occlus dans ledit catalyseur de NOₓ (16) ;
une étape d'élimination de la contamination par les SOₓ (S101 à S104) pour libérer les SOₓ occlus dans ledit catalyseur de NOₓ (16) de celui-ci en faisant affluer un gaz d'échappement de rapport air/carburant prescrit dans ledit catalyseur de NOₓ (16) ;
une étape de détection de concentration de HC (S102, S107) pour détecter une concentration de HC dans les gaz d'échappement en un point en aval dudit catalyseur de NOₓ (16) ; et
une étape de commande de concentration de HC (S103 et S104) pour commander ladite concentration de HC détectée à ladite étape de détection de concentration de HC (S107) pour que celle-ci soit inférieure ou égale à une concentration de HC prescrite en ajustant le rapport air/carburant des gaz d'échappement affluant dans ledit catalyseur de NOₓ (16) à ladite étape d'élimination de la décontamination par les SOₓ (S101 à S104) pour que celui-ci soit plus riche conformément à la diminution de la quantité d'occlusion de SO_{X} estimée à ladite étape d'estimation de la quantité d'occlusion de SOₓ (S100, S105).

5. Procédé d'élimination de la contamination par les SOₓ pour un moteur à combustion interne selon la revendication 4, **caractérisé en outre par** :
une étape de correction du rapport air/carburant (S108 et S109) pour corriger ledit rapport air/carburant des gaz d'échappement affluant dans ledit catalyseur de NOₓ (16) à ladite étape d'élimination de la contamination par les SOₓ (S101 à S104) pour que celui-ci soit plus pauvre lorsque ladite concentration de HC détectée à ladite étape de détection de concentration de HC (S107) excède une concentration de HC prescrite de prévention de fumées blanches.

6. Procédé d'élimination de la contamination par les SOₓ pour un moteur à combustion interne selon la revendication 5, **caractérisé en outre par** :
une étape de correction de la quantité d'occlusion de SOₓ estimée (S111 et S112) pour effectuer la correction à l'augmentation de la quantité d'occlusion de SOₓ estimée à ladite étape d'estimation de la quantité d'occlusion de SOₓ (S105) lorsque la correction du rapport air/carburant des gaz d'échappement vers plus de pauvreté à ladite étape de correction du rapport air/carburant (S201 et S202) est effectuée à une fréquence prescrite ou supérieure, ou lorsque la quantité de correction du rapport air/carburant des gaz d'échappement à ladite étape de correction du rapport air/carburant (S201 et S202) excède une quantité prescrite de correction.
